Europäisches Patentamt

European Patent Office

Office européen des brevets

(11) Publication number: **0 176 300**
**B1**

(12) **EUROPEAN PATENT SPECIFICATION**

(45) Date of publication of patent specification: **17.10.90**

(51) Int. Cl.⁵: **G 05 D 1/06**

(21) Application number: **85306571.2**

(22) Date of filing: **16.09.85**

(54) Speed capture in climb for aircraft.

(30) Priority: **17.09.84 US 650742**

(43) Date of publication of application:
**02.04.86 Bulletin 86/14**

(45) Publication of the grant of the patent:
**17.10.90 Bulletin 90/42**

(84) Designated Contracting States:
**DE FR GB IT**

(56) References cited:
**EP-A-0 030 066**
**EP-A-0 078 688**
**EP-A-0 127 390**
**DE-A-2 158 747**
**GB-A-1 270 754**
**US-A-3 524 612**

(73) Proprietor: **HONEYWELL INC.**
**Honeywell Plaza**
**Minneapolis MN 55408 (US)**

(72) Inventor: **Greeson, Jeffrey Allen**
**2707 East Charleston Avenue**
**Phoenix Arizona 85302 (US)**
Inventor: **Zweifel, Terry L.**
**7250 North 30th Drive**
**Phoenix Arizona 85021 (US)**

(74) Representative: **Singleton, Jeffrey et al**
**Eric Potter & Clarkson St. Mary's Court St.**
**Mary's Gate**
**Nottingham NG1 1LE (GB)**

Courier Press, Leamington Spa, England.

## Description

The present invention relates generally to aircraft automatic flight control systems and more specifically to acceleration control apparatus as defined in the preamble of Claim 1.

Most commercial transport aircraft, general aviation aircraft and military aircraft are equipped with an automatic flight control system which generally provide the pilot with the capability of altering the flight path of the aircraft to achieve and maintain a desired speed, measured either in knots or Mach number.

During a climb portion of flight, the pilot may elect to increase the speed of the aircraft through a manually-entered speed command or may be mandated by Air Traffic Control (ATC) to accelerate to a specified speed. Soon after lift-off, the pilot will generally increase the speed of the aircraft in order to retract the flaps. In addition, in the United States, the Federal Aviation Administration (FAA) requires that aircraft speed be no greater than 250 knots (463 km/h) indicated airspeed at altitudes less than 10,000 feet (3048 m). Thus the pilot is generally required to accelerate the aircraft in successive steps as the aircraft configuration changes and minimum altitudes are reached. Further, it is desirable to accelerate to the optimum climb speed as quickly as possible in order to maximise fuel savings. In addition, a positive rate of climb should be maintained at all times while accelerating and it is generally an ATC requirement that a minimum climb rate of 500 fpm (152 m/min) will be maintained, particularly at low altitudes.

In the prior art, these accelerations were generally accomplished by the well known method of decreasing the pitch attitude of the aircraft in a manner proportional to the difference between the new speed command and the actual speed of the aircraft, or speed error. While this scheme will accelerate the aircraft to the desired Mach or airspeed, there is no assurance this will be done in a timely or optimal manner or that any minimum altitude rate restrictions will be met.

More specifically, there is disclosed in EP—A—0078688 speed control apparatus for use in an aircraft performance management system of a type wherein a target Mach number command is applied to the aircraft pitch controls to attain the target Mach and is simultaneously supplied to the aircraft throttles to capture a computed engine pressure ratio or fan speed, the apparatus being operable during maximum thrust climbs and minimum thrust descent upon an abrupt step function target Mach number command, wherein the step function command is converted to a ramp command, the slope of which is directed proportional to the existing thrust-minus-drag conditions of the aircraft and inversely proportional to its existing weight. EP—A—0127390 discloses deceleration control apparatus for an aircraft having an automatic altitude capture and hold system and an air speed hold system, both systems being controlled by controlling pitch attitude, wherein during a descent from a higher altitude under airspeed-on-pitch control with throttle set at idle thrust, and at some existing negative altitude rate, a slower speed is commanded. A specific altitude based on the existing descent rate is computed and the attitude capture and hold system rendered operative in place of the airspeed-on-pitch control to cause the aircraft to flare towards the synthetic altitude.

The acceleration control apparatus of the present invention is characterised in that the first means is coupled to receive signals representative of actual aircraft speed (M) and a commanded higher speed (Mc), and in that the apparatus further comprises second means (48, 10, 12) for providing said second signal, said second signal being representative of a computed altitude beginning at a predetermined height above the actual altitude of the aircraft at the moment of command to change speed and then increasing at a rate corresponding to a predetermined rate of climb of the aircraft, the second means being coupled to receive signals representative of the actual altitude (H), the rate of climb (Ḣ), the true airspeed ($V_T$) and the division by the weight of the aircraft of thrust minus drag, the flight control system resuming normal speed control proportional to speed error when the actual speed is within a predetermined range of the commanded speed.

The present invention thus provides means for automatic, optimal acceleration of an aircraft to a higher commanded speed during the climb portion of flight by the capture of a computed altitude, based on the actual climb altitude rate of the aircraft, that is increased at a specified rate. The rate of increase is generally 500 fpm (152 m/min) to provide optimal acceleration and still meet minimum altitude rate restrictions but may be less if the plane is not capable of accelerating at a climb rate of 500 fpm (152 m/min). Means are further provided to automatically command a higher speed, based on pilot-entered or stored data, such that the commanded speed will be achieved when above specified altitudes. Optimal accelerations may thus be achieved either with specified altitude requirements or in the absence of such requirements.

The shortcomings of the prior art are overcome by computing an altitude based upon the present climb rate, or altitude rate of the aircraft, and then increasing the altitude at a rate that will assure a 500 fpm (152 m/min) rate of climb or less if the plane is not capable of accelerating at a climb rate of 500 fpm (152 m/min). This altitude is then used to tend to pitch the aircraft down to achieve the specified rate with the engine(s) at climb thrust until the difference between the desired speed and the actual speed of the aircraft is within a predetermined amount, at which time conventional speed control proportional to speed error is resumed.

A flight control system for an aircraft in accordance with the present invention will now be described in greater detail, by way of example, with reference to the accompanying drawings, in which:—

Figure 1 is a graph of altitude versus distance illustrating the climb flight path generated by the present invention to accelerate to a commanded speed which is significantly higher than the actual speed of the aircraft,

Figure 2 is a graph of altitude versus distance illustrating the climb flight path generated by the present invention when the command speed is only slightly higher than the actual speed of the aircraft,

Figure 3 is a block diagram of the present invention showing the calculation of a compound altitude, the increase of the computed altitude at a selected rate and the switching of pitch control between conventional proportional speed error and automatic capture of the computed altitude, and

Figure 4 is a logic diagram illustrating the various parameters used in the controlling of the transfer of speed control from conventional proportional airspeed-on-pitch to the altitude capture acceleration control of the present invention, and vice versa.

The present invention is useful in any automatic flight control system or in any performance management system (PMS) that is fully coupled to an automatic flight control system, and provides apparatus for automatically transitioning the aircraft to a higher commanded speed in the climb portion of the flight. In either system, it is often desirable for the pilot to increase the speed of the aircraft to achieve a particular speed in order to retract flaps or to accelerate to 250 knots (463 km/h) or the desired climb speed when specified minimum altitudes are reached.

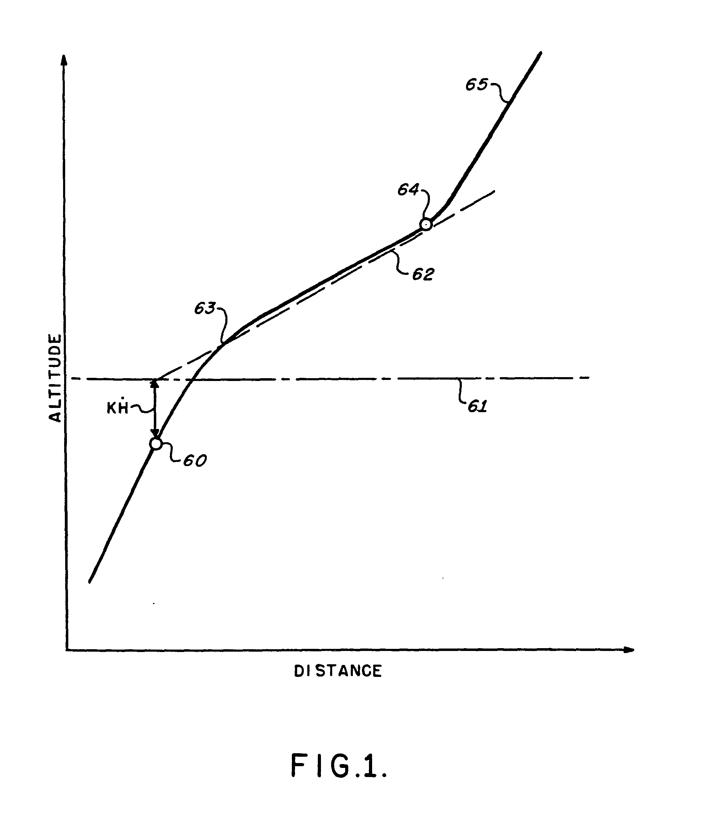

To illustrate the invention, reference is first made to Figure 1. Assume the aircraft is climbing at an altitude above 10,000 feet (3048 m) and that no acceleration of the aircraft has been commanded. Hence, the aircraft will be climbing at some altitude rate $\dot{H}$. Now assume that the aircraft is to be accelerated either by a pilot-entered or an automatic speed command which is significantly higher than the present speed of the aircraft and that the speed command occurs at 60. A computed altitude 61 is determined by the relationship

$$H_S = H + K\dot{H} \tag{1}$$

Where

$H_S$ = the computed altitude in feet (or metres).

$H$ = the actual altitude of the aircraft in feet (or metres).

$K$ = a characterising parameter that determines the shape of the capture flight path and may be of the form $K = he/\dot{h}a$ where $he$ = altitude error in feet (or metres) between the selected altitude and the present altitude and $\dot{h}a$ = rate of climb.

$\dot{H}$ = the present altitude rate of the aircraft in feet per minute (or metres per minute).

It will be noted that the computed altitude will always be $K\dot{H}$ feet (or metres) above the actual altitude of the aircraft according to equation (1) above.

An increasing altitude 62 which will be used by the autopilot or Performance Management System (PMS) is determined by

$$H_{RAMP} = H_S + \dot{H}_{RAMP} (t - t_0) \tag{2}$$

where

$H_{RAMP}$ = the computed ramping altitude in feet (or metres).

$H_S$ = the initial computed altitude in feet (or metres).

$\dot{H}_{RAMP}$ = the predetermined rate of increase in the computed altitude in feet per minute (or metres per minute).

$t$ = time in minutes.

$t_0$ = time at 60 in minutes.

It will be noted that when $t = t_0$, or at 60, the ramping computed altitude will equal the initial computed altitude according to equation (2) above.

The automatic flight control system or PMS will then command the elevator or horizontal stabiliser in such a fashion as to alter the flight path of the aircraft along line segment 63 according to the control law:

$$H_E - K\dot{H} = 0 \tag{3}$$

Where

$H_E$ = altitude error in feet (or metres) between the computed ramping altitude and the actual altitude.

$K$ = a characterising parameter as defined above.

$\dot{H}$ = the actual altitude rate in feet per minute (or metres per minute).

The aircraft will thus accelerate to the new speed command while maintaining the computed ramping altitude until the actual aircraft speed is within some predetermined amount of the commanded speed, for example 0.01 Mach. This event is shown as 64. At 64, the altitude capture control law, equation (3) above, is no longer used and the new speed is maintained using conventional proportional control speed along the line segment 65.

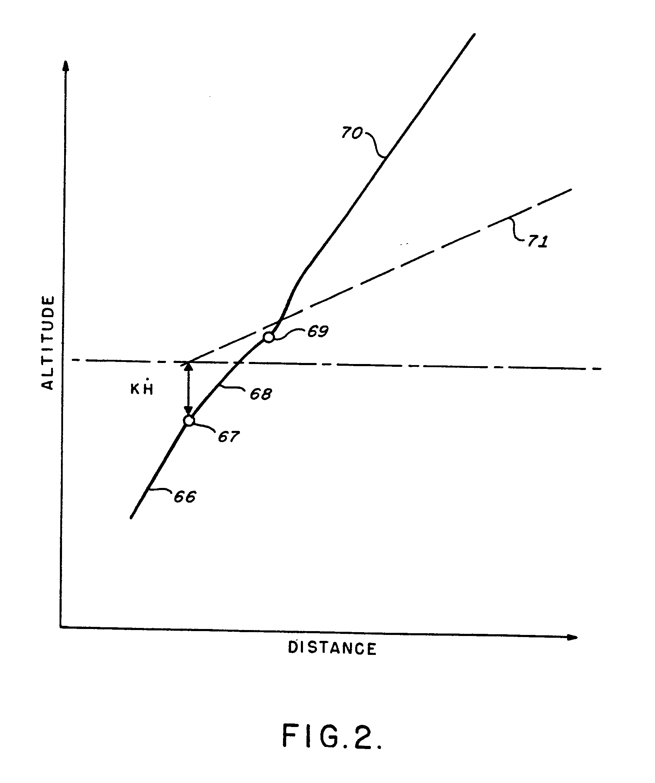

Referring now to Figure 2, assume that the newly commanded speed is only slightly more than the present speed of the aircraft, but the difference is greater than some predetermined amount, for example 0.0005 Mach. Further assume that the new speed command occurs at 67. As in the above example, the present invention will compute a ramping altitude 71 and the control law expressed by equation (3) will be invoked. As the aircraft begins the capture of the computed ramping altitude along line segment 68, it will also begin to accelerate toward the new commanded speed. When the actual speed is within some predetermined amount of the commanded speed, represented by 69, the capture of the computed ramping altitude is abandoned and conventional speed control is resumed along line segment 70.

By way of example, assume the aircraft is being flown at 250 knots (463 km/h) with a climb rate of 3000 feet per minute (914 m/min) and has just climbed through 10,000 feet (3048 m/min). Assume that a speed command of 300 knots (556 km/h) is entered automatically or is entered manually by the pilot. Assume for simplicity that the value of K is held constant at 0.25. The automatic command of the higher speed would result in the computation of an initial capture altitude by equation (1) above and the result would be (10,000+750) or 10,750 feet (3277 m). Assume that the predetermined rate of change of this altitude is to be 500 feet per minute (152 m/min). According to equation (2), the capture altitude would equal 10,750 feet (3277 m) at the point where the new speed is commanded, would equal 11,250 feet (3429 m) one minute later, 11,750 feet (3581 m) two minutes later and so forth. The control law equation (3) would thereafter be used to capture the ramping altitude and the aircraft would begin to accelerate toward the commanded 300 knots (556 km/h) indicated airspeed. Once having achieved the commanded speed within some predetermined amount, the altitude capture control law described above would no longer be used and speed control would revert to conventional proportional control.

To comply with FAA regulations and approved flying procedures, the speed and altitude requirements could either be entered by the pilot or stored within the automatic pilot or PMS. As the aircraft climbs from take-off to cruising altitude, the climb speeds would automatically be commanded at predetermined altitudes and changes in aircraft configuration (i.e., retraction of flaps and landing gear) and the new speed command would be captured in the same fashion illustrated by the above example.

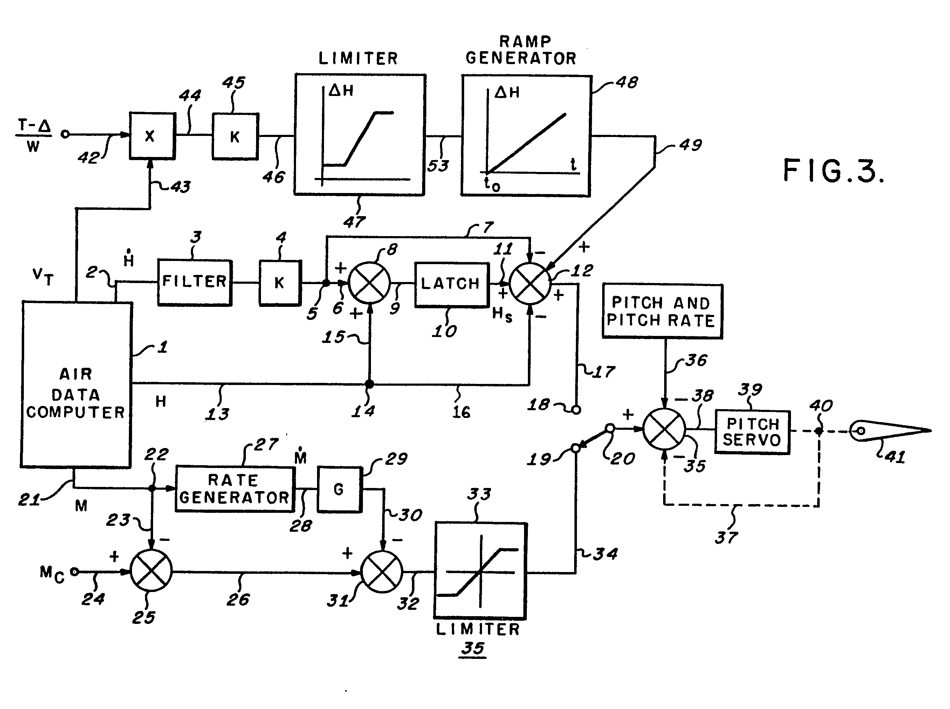

The present invention may be implemented by using conventional analogue circuitry and computational techniques, or by using conventional wholly digital techniques, or by using conventional hybrid digital/analogue techniques. To simplify the understanding of the invention, it will be explained by using a generally analogue format as shown in Figure 3, it being understood that the same analogue format may also represent, in block diagram form, the program of a programmable digital computer wherein the various analogue inputs are converted to digital signals for digital processing and the various digital outputs are converted to analogue signals for driving the control surface servomotors and the like.

Referring to Figure 3, assume the aircraft is climbing at an altitude higher than 10,000 feet (3048 m) and that no acceleration of the aircraft has been commanded. Switch blade 20 will be in the position shown, making contact with a contact 19. A signal proportional to the actual Mach number (M) of the aircraft is supplied by a conventional air data computer 1 and appears on a lead 21 and at a junction 22. It is compared with a signal proportional to the commanded Mach number (Mc), which appears on a lead 24 and is applied to a conventional summation device 25. The actual Mach number from junction 22 appears on a lead 23 where it is also applied to the summation device 25, the output of which, which represents the difference between the commanded and actual Mach numbers (Mach error) appears on a lead 26 and is applied to summation device 31. Simultaneously, the actual Mach number from junction 22 is applied to conventional rate generator 27 whose output appears on lead 28 and is a signal proportional to the time rate of change of actual Mach number or Mach rate ($\dot{M}$). Mach rate is multiplied by an appropriate gain (G) at 29 and the result appears on a lead 30 which is supplied to a conventional summation device 31. The output of summation device 31, appearing on lead 32, will be the well-known proportional plus rate control of Mach number. The lead 32 supplies a limiter 33 (the characteristics of which are illustrated) with the proportional plus rate signal. The limiter 33 is a conventional limiter the function of which is to assure the resultant pitch and pitch rate of the aircraft will be maintained within specified limits. The output of the limiter 33 appears on a lead 34 and at switch contact 19. This signal is applied to a conventional summation device 35 via switch blade 20. Signals proportional to the pitch angle and pitch rate of the aircraft are supplied to a summation device 35 via a lead 36 in the conventional manner. The output signal of summation device 35 is applied to a servomotor 39 which, through a mechanical linkage 40, moves the aircraft's elevator or horizontal stabiliser 41. A mechanical linkage 37 supplies the summation device 35 with a signal proportional to elevator or horizontal stabiliser position so that the signal on lead 38 is reduced to null in the steady state condition.

Simultaneously with the action described above, the air data computer 1 supplies a signal proportional to the altitude rate of the aircraft ($\dot{H}$) on a lead 2 to a filter 3 which is a conventional filter whose purpose is to eliminate or minimise atmospheric or electronic noise that may be present on the altitude rate signal. The output signal of the filter 3 is supplied to gain block 4 where it is multiplied by a value K which may either be a constant or a variable number. The output signal of the gain block 4 appears at junction 5 and represents the term $K\dot{H}$. One lead from a junction 5 appears on a lead 6 and thence to conventional summation device 8.

The air data computer 1 also supplies a signal proportional to the actual altitude of the aircraft H on a lead 13 and at a junction 14. On lead 15 from the junction 14 supplies the altitude signal to a summation device 8 where it is algebraically added to the $K\dot{H}$ term explained above. The output of the summation device 8 appears on a lead 9 and represents the term $H+K\dot{H}$, the lead being connected to a Latch 10 which in the present case is synchronised such that its output on a lead 11 is identical to the signal on the lead 9.

A signal proportional to the well known relationship (Thrust-Drag)/Weight is applied to a lead 42. The term on the lead 42 is multiplied by a signal proportional to true airspeed ($V_T$) provided on a lead 43 by the air data computer 1. The resulting term appears on a lead 44 and is proportional to the maximum altitude rate that can be achieved by the aircraft. The term on the lead 44 is multiplied by a gain block 45 which is chosen so as to produce a percentage of the maximum altitude rate on a lead 46, such as 25%. The term on the lead 46 is then limited to be within certain values, such as between 100 fpm (30.5 m/min) and 500 fpm (152 m/min), by a limiter 47. The resulting limited term on a lead 53 represents the rate of increase in the computed capture altitude, $\dot{H}_{RAMP}$. A ramp generator 48 normally produces a delta H value on a lead 54 computer as:

$$\text{Delta } H_{RAMP} = \dot{H}_{RAMP} \text{ at } (t-t_0) \qquad (4)$$

Where

Delta $H_{RAMP}$=the delta H produced by the ramp generator in feet (or metres).

$\dot{H}_{RAMP}$=rate of increase in the computed altitude in feet per minute (or metres per minute).

t=time in minutes.

$t_0$=time at start of ramp generation in minutes.

When no acceleration has been commanded, the value of $t_0$ is continuously set equal to $t$ thus providing synchronisation and producing a zero term on lead 49.

The $K\dot{H}$ term from the junction 5 is supplied to a conventional summation device 12 via lead 7. Actual altitude signal from the junction 14 is also supplied to the summation device 12 via a lead 16. The ramping delta H signal is applied to the summation device 12 via a lead 49. As can be seen, the output of the summation device 12 on lead 17 represents the term $(K\dot{H}+H)-(K\dot{H})-(H)+\dot{H}_{RAMP}$ at $(t-t_0)$ which will be at a null value. The latter term will be at a null value since $t_0$ is continuously set equal to 2.

Now assume that the pilot elects to accelerate the aircraft to a new commanded speed by entering the speed through either an analogue dial or a computer display panel. If the difference between the newly-commanded speed and the old commanded speed exceeds a predetermined value, for example 0.005 Mach, the switch blade 20 will be moved to make contact with contact 18 and latch 10 will be activated. The value appearing on lead 9, which as explained before represents the term $H+K\dot{H}$, at the instant switch blade 20 moves to contact 18 will be stored and maintained on lead 11 regardless of subsequent changes in the value appearing on lead 9. The value of the signal on lead 11 therefore represents a computed altitude $H_S$. The value of $t_0$ at the instant the switch blade 20 moves to contact 18 will be stored providing a time reference point for the ramp generator 48 which will then produce a ramping delta H signal on lead 49 according to equation (4) above. The values appearing on leads 7 and 16 do vary with time and represent $K\dot{H}$ and H, respectively. Thus, the output on lead 17 represents the solution to the expression:

$$H_S+H_{RAMP}(t-t_0)-H-K\dot{H}$$

This signal is applied to the summation device 35 via the switch contact 18 and the switch blade 20 and is thence used to manipulate the position of the aircraft's elevator or horizontal stabiliser in such a fashion as to reduce the value appearing on lead 17 to a null value. This action will cause either an asymptotic or circular flght path towards the computed ramping altitude, $H_{RAMP}$, depending on whether the value of K is a constant or a variable dependent on the actual altitude rate of the aircraft.

As the aircraft pitch angle is decreased during the capture manoeuvre described above, the aircraft's speed will increase toward the newly selected value. When the difference between the actual speed of the aircraft and the commanded speed is less than some predetermined value, for example 0.01 Mach, the switch blade 20 will make move from contact 18 to contact 19, returning the pitch control to the proportional plus rate control of speed described above. In addition, the latch 10 will return to its synchronisation mode, the ramp generator 48 will return to its synchronisation mode, and the output on lead 17 will be a null value.

It will be clear that the aircraft may not actually capture the computed altitude if the difference between the newly commanded Mach and the previous Mach command is small. During the decrease in pitch angle of the capture manoeuvre, the aircraft may accelerate to within the predetermined value before it has captured the ramping altitude. In such cases, a slight decrease in the rate of climb would occur as the aircraft accelerates.

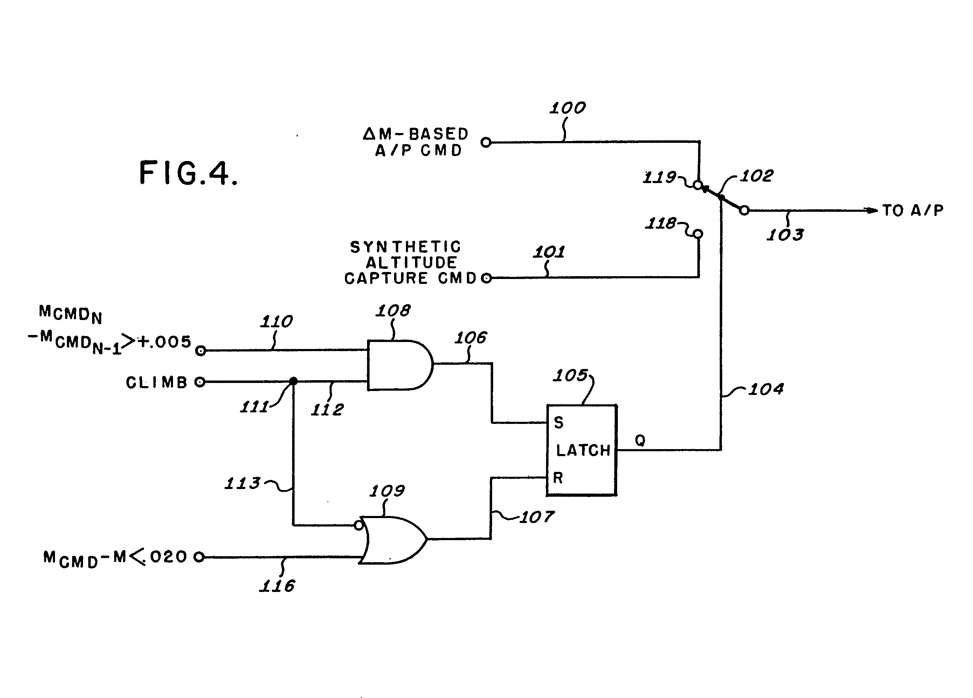

Referring to Figure 4, assume the aircraft is climbing at an actual speed M that is within some predetermined amount of the commanded speed $M_{CMD}$ such as 0.02 Mach. The condition of being in the climb mode will produce a logic 1 on lead 111 and on leads 112 and 113. A logic 1 on lead 113 causes the output on a lead 107 of a conventional logic OR gate 109 to be the same as that of a lead 116. Similarly, a logic 1 on lead 112 will cause the output on a lead 106 of a conventional logic AND gate 108 to be the same as that of a lead 110. In the condition described above, the speed is within the predetermined amountand thus a logic 1 is produced on lead 116. A logic 1 on lead 116 produces a logic 1 as output on a lead 107 from the conventional logic OR gate 109. A logic 1 on lead 107 causes a conventional latch 105 to be reset producing a logic 0 output on a lead 104. A logic 0 on lead 104 will cause a switch blade 102 to make contact with a contact 119 and will thus transfer the Mach error or airspeed error based autopilot command to the autopilot via lead 103.

Now assume the commanded speed is increased more than a predetermined amount such as 0.005 Mach, such that a logic 1 is produced on the lead 110. A logic 1 on the lead 110 will cause a logic 1 to be output on the lead 106 from the conventional logic AND gate 108. A logic 1 on the lead 106 will cause the latch 105 to be set producing a logic 1 as output on the lead 104. A logic 1 on the lead 104 will cause the switch blade 102 to move to make contact with a contact 118 instead of the contact 119. The switch blade 102 will then transfer the synthetic altitude capture autopilot command present on lead 101 to the autopilot via the lead 103. When the actual speed is again within the predetermined amount of the commanded speed, a logic 1 will again be produced on the lead 116 which, as explained above, will cause the switch blade 102 to make contact with the contact 119, returning the autopilot control to the speed error based command.

If the mode were not climb, a logic 0 would be produced at the junction 111 and on the leads 112 and 113. A logic 0 on the lead 112 will cause the output on the lead 106 of the conventional logic AND gate 108 always to be zero regardless of the logic state on the lead 110. A zero on the lead 106 will cause the conventional latch 105 not to be set. A logic 0 on the lead 113 will cause the output on lead 107 of conventional logic OR gate 109 to always be a logic 1 regardless of the logic state of lead 116. A logic 1 on the lead 107 will cause the conventional latch 105 to be reset producing a logic 0 on the lead 104 as the output of the latch 105. As explained above, this will cause the switch blade 102 to make contact with the contact 119, returning autopilot control to the speed error based command.

From the foregoing, it will be appreciated that the present invention provides improved automatic acceleration of the aircraft in the climb portion of the flight in the following manner:

(1) The aircraft is controlled by the computation and capture of a ramping altitude in such a way as to provide the optimal acceleration to a commanded speed.

(2) The acceleration described above is consistent with altitude rate restrictions imposed on the acceleration.

(3) The aircraft will always maintain a positive rate of climb while accelerating.

**Claims**

1. Acceleration control apparatus, for a flight control system, for automatic transition of an aircraft from a first speed to a selected higher speed during climb, including servo means for controlling aircraft pitch attitude, with the flight control system normally exercising speed control proportional to speed error, first means (25, 27, 31, 33) for providing a first signal proportional to aircraft speed plus time rate of change of the aircraft speed, and means (20) for selecting the first or a second signal for coupling to the servo means, characterised in that the first means is coupled to receive signals representative of actual aircraft speed (M) and a commanded higher speed (Mc), and in that the apparatus further comprises second means (48, 10, 12) for providing said second signal, said second signal being representative of a computed altitude beginning at a predetermined height above the actual altitude of the aircraft at the moment of command to change speed and then increasing at a rate corresponding to a predetermined rate of climb of the aircraft, the second means being coupled to receive signals representative of the actual altitude (H), the rate of climb ($\dot{H}$), the true airspeed ($V_T$) and the division by the weight of the aircraft of thrust minus drag, the flight control system resuming normal speed control proportional to speed error when the actual speed is within a predetermined range of the commanded speed.

2. Acceleration control apparatus according to Claim 1, characterised in that the first means for providing the first signal includes means (25) responsive to signals proportional to the actual aircraft speed and the selected higher speed for providing a first error signal proportional to the difference between the actual aircraft speed and the selected higher speed, means (27) responsive to signals proportional to the actual aircraft speed for providing a time rate of change signal proportional to the actual aircraft speed, means (31) responsive to the time rate of change signal and to the first error signal for providing a second error signal proportional to the difference between the first error signal and the time rate of change signal, and means (33) responsive to the second error signal for limiting the second error signal within a predetermined range, the limited second error signal representing the first signal for coupling to the servo means.

3. Acceleration control apparatus according to Claim 1, characterised in that the second means for providing the second signal includes means (10) responsive to a first algebraic sum of signals proportional to actual altitude (H) and a rate of climb ($\dot{H}$) of the aircraft for providing a latched signal, means (48) for providing a ramp signal proportional to a signal representative of a maximum rate of climb achievable for the aircraft wherein the maximum achievable rate of climb signal is limited to a predetermined range, multiplication means (X) responsive to signals proportional to the true air speed ($V_T$) and the division by the weight of the aircraft of the algebraic difference of thrust minus drag ((T−D)/W), for providing the signal representative of maximum achievable rate of climb, and means (12) for providing a second algebraic sum of signals comprising the ramp signal, the latched signal, and the signals proportional to actual altitude the climb rate of the aircraft the second algebraic sum representing the second signal.

4. Acceleration control apparatus according to Claim 3, characterised in that the latched signal is of the form:—

$$H_S = H + K\dot{H}$$

Where

$H_S$ = computed altitude in feet (or metres)

H = actual altitude of the aircraft in feet (or metres)

K = a parameter that determines the shape of the flight path of the form K=he/$\dot{h}$a where he=altitude error in feet (or metres) between the selected altitude and the present altitude and $\dot{h}a$=rate of climb.

$\dot{H}$=present rate of climb of the aircraft in feet per minute (or metres per minute).

5. Acceleration control apparatus according to Claim 3 or 4, characterised in that the ramp signal is of the form:—

$$H_{RAMP}=H_S+\dot{H}_{RAMP}(t-t_0)$$

Where

$H_{RAMP}$=computer ramping altitude in feet (or metres)

$H_S$=initial computed altitude in feet (or metres)

$\dot{H}_{RAMP}$=predetermined rate of increase in the computed altitude in feet per minute (or metres per minute)

$t$=time in minutes

$t_0$=time at initial computed altitude

6. Acceleration control apparatus according to any of Claims 3 to 5, characterised in that the second algebraic sum signal is of the form:—

$$H_E-K\dot{H}=0$$

Where

$H_E$=altitude error in feet (or metres) between the computed ramping altitude and the actual altitude.

$K$=a parameter that determines the shape of the flight path of the form $K=he/\dot{h}a$ where he=altitude error in feet (or metres) between the selected altitude and the present altitude and $\dot{h}a$=rate of climb

$\dot{H}$=said actual rate of climb in feet per minutes (metres per minute).

**Patentansprüche**

1. Beschleunigungssteuergerät—für eine Flugregelanlagezum automatischen überleiten eines Flugzeugs aus einer ersten Geschwindigkeit auf eine ausgewählte höhere Geschwindigkeit während des Steigflugs mit einer Servoeinrichtung zum Steuern der Längsneigung des Flugzeugs, wobei die Flugregelanlage normalerweise die Geschwindigkeitssteuerung proportional zu einem Geschwindigkeitsfehler ausübt, einer ersten Einrichtung (25, 27, 31, 33) zur Bereitstellung eines ersten Signals, welches der Flugzeuggeschwindigkeit zuzüglich der zeitlichen Änderungsgeschwindigkeit der Flugzeuggeschwindigkeit proportional ist, sowie einer Einrichtung (20) zur Auswahl des ersten oder eines zweiten Signals zum Anschluß an die Servoeinrichtung; dadurch gekennzeichnet, daß die erste Einrichtung Signale entsprechend der tatsächlichen Flugzeuggeschwindigkeit (M) und einer kommandierten höheren Geschwindigkeit (Mc) empfängt; und daß das Gerät ferner eine zweite Einrichtung (48, 10, 12) zur Lieferung des zweiten Signals umfaßt und dieses zweite Signal einer berechneten Höhe entspricht, welche bei einer vorgegebenen Höhe oberhalb der tatsächlichen Flughöhe des Flugzeugs im Augenblick des Geschwindigkeitsänderungskommandos beginnt und dann mit einer, einer vorgegebenen Steigrate entsprechenden Geschwindkeit zunimmt, wobei die zweite Einrichtung Signale entsprechend der tatsächlichen Flughöhe (H), der Steigrate ($\dot{H}$), der Eigengeschwindigkeit ($V_T$) sowie dem Quotienten ((T−D)/W) aus Schub (T) minus Luftwiderstand (D) geteilt durch das Gewicht (W) des Flugzeugs erhält und die Flugregelanlage die normale, dem Geschwindigkeitsfehler proportionale Geschwindigkeitssteuerung übernimmt, sobald die tatsächliche Geschwindigkeit innerhalb eines vorgegebenen Bereichs der kommandierten Geschwindigkeit liegt.

2. Beschleunigungssteuergerät nach Anspruch 1, dadurch gekennzeichnet, daß die erste Einrichtung zur Erzeugung des ersten Signals eine Vorrichtung (25) umfaßt, welche auf Signale anspricht, die der tatsächlichen Flugzeuggeschwindigkeit und der gewählten höheren Geschwindigkeit proportional sind, wobei diese erste Einrichtung ein erstes Fehlersignal erzeugt, welches der Differenz von tatsächlicher Flugzeuggeschwindigkeit und gewählter höherer Geschwindigkeit proportional ist; ferner eine Einrichtung (27) enthält, welche auf der tatsächlichen Flugzeuggeschwindigkeit proportionale Signale anspricht und ein der tatsächlichen Flugzeuggeschwindigkeit proportionales zeitabhängiges Geschwindigkeitsänderungssignal liefert; außerdem eine auf dieses Geschwindigkeitsänderungssignal sowie das erste Fehlersignal ansprechende Einrichtung (31) umfaßt, welche ein zweites Fehlersignal liefert, das der Differenz zwischen dem ersten Fehlersignal und dem zeitabhängigen Geschwindigkeitsänderungssignal entspricht; und schließlich eine auf das zweite Fehlersignal ansprechende Einrichtung (33) aufweist, welche das zweite Fehlersignal innerhalb eines vorgegebenen Bereichs begrenzt, wobei das begrenzte zweite Fehlersignal das erste Signal zum Anschluß an die Servoeinrichtung bildet.

3. Beschleunigungssteuergerät nach Anspruch 1, dadurch gekennzeichnet, daß die das zweite Signal liefernde zweite Einrichtung eine Vorrichtung (10) aufweist, welche auf eine erste algebraische Summe von Signalen anspricht, die der tatsächlichen Höhe (H) und der Steiggeschwindigkeit ($\dot{H}$) des Flugzeugs proportional sind, und die ein Verriegelungssignal liefert;

ferner eine Einrichtung (48) umfaßt, welche ein Rampensignal abgibt, das einem der maximalen Steiggeschwindigkeit des Flugzeugs entsprechendes Signal proportional ist, wobei das Maximalsteigratensignal auf einen vorgegebenen Bereich begrenzt ist;

außerdem einen Multiplizierer (X) enthält, dem ein der Eigengeschwindigkeit ($V_T$) proportionales Signal sowie ein der durch das Gewicht des Flugzeugs geteilten algebraischen Differenz von Schub und Luftwiderstand ((T−D)/W) proportionales Signal zugeführt werden und der das der maximalen Steigrate entsprechendes Signal liefert; und

schließlich eine ein zweites algebraisches Summensignal erzeugende Vorrichtung (12) umfaßt, wobei das Summensignal aus dem Rampensignal, dem Verriegelungssignal und den der tatsächlichen Höhe und der Steigrate des Flugzeugs proportionalen Signalen gebildet wird und dieses zweite algebraischen Summensignal das zweite Signal bildet.

4. Beschleunigungssteuergerät nach Anspruch 3, dadurch gekennzeichnet, daß das Verriegelungssignal ($H_S$) der Gleichung

$$H_S = H + K\dot{H}$$

genügt, wobei
$H_S$=berechnete Höhe in Fuß (oder Metern),
$H$=tatsächliche Flughöhe in Fuß (oder Metern),
$K$=ein den Verlauf des Flugwegs bestimmender Parameter mit $K = he/\dot{h}a$, wobei he der Höhenfehler in Fuß (oder Metern) zwischen der gewählten Höhe und der gegenwärtigen Höhe ist, und $\dot{h}a$ die Steigrate ist,
$\dot{H}$=die gegenwärtige Steigrate des Flugzeugs in Fuß pro Minute (oder Meter pro Minute).

5. Beschleunigungssteuergerät nach Anspruch 4, dadurch gekennzeichnet, daß das Rampensignal ($H_{RAMP}$) der Gleichung:

$$H_{RAMP} = H_S + \dot{H}_{RAMP}(t - t_o)$$

genügt, wobei
$H_{RAMP}$=berechnete Rampenhöhe in Fuß (oder Metern),
$H_S$=anfänglich berechnete Höhe in Fuß (oder Metern),
$\dot{H}_{RAMP}$=vorgegebene Zunahmegeschwindigkeit der berechneten Höhe in Fuß pro Minute (oder Metern pro Minute),
$t$=Zeit in Minuten
$t_0$=Zeit bei der anfänglich berechneten Höhe.

6. Beschleunigungssteuergerät nach einem der Ansprüche 3 bis 5, dadurch gekennzeichnet, daß das zweite algebraische Summensignal der Gleichung

$$H_E - K\dot{H} = 0$$

genügt, wobei
$H_E$=Höhenfehler in Fuß (oder Metern) zwischen der berechneten Rampenhöhe und der tatsächlichen Höhe,
$K$=ein den Verlauf des Flugwegs bestimmender Parameter mit $K = he/\dot{h}a$, wobei he der Höhenfehler in Fuß (oder Metern) zwischen der gewählten Höhe und der gegenwärtigen Höhe ist, und $\dot{h}a$ die Steigrate ist,
$\dot{H}$=die gegenwärtige Steigrate des Flugzeugs in Fuß pro Minute (oder Meter pro Minute).

**Revendications**

1. Dispositif de commande de l'accélération, pour un système de commande de vol, pour faire passer de façon automatique un avion d'une première vitesse à une vitesse supérieure sélectionnée pendant une ascension, comportant des moyens de servocommande servant à commander l'assiette longitudinale de l'avion, le système de commande de vol appliquant normalement une commande de la vitesse proportionnellement à l'écart de vitesse, des premiers moyens (25, 27, 31, 33) servant à délivrer un premier signal proportionnel à la vitesse de l'avion plus un taux de variation de la vitesse de l'avion, et des moyens (20) pour sélectionner le premier signal ou un second signal pour l'appliquer aux moyens de servocommande, caractérisé en ce que les premiers moyens sont accouplés de manière à recevoir des signaux représentatifs de la vitesse réelle (M) de l'avion et d'une vitesse supérieure commandée (Mc), et en ce que le dispositif comporte en outre des seconds moyens (48, 10, 12) servant à délivrer ledit second signal, ledit secnod signal étant représentatif d'une ascension calculée partant d'une hauteur prédéterminée au-dessus de l'altitude réelle de l'avion, au moment de l'ordre de modification de la vitesse, et augmentant un taux correspondant à une vitesse asensionnelle prédédeterminée de l'avion, les seconds moyens étant accouplés de manière à recevoir des signaux représentatifs de l'altitude réelle (H), de la vitesse ascensionnelle ($\dot{H}$), de la vitesse aérodynamique vraie ($V_T$) et du rapport de la poussée moins la traînée au poids de l'avion, le système de commande de vol reprenant la commande normale de la vitesse proportionnellement à l'écart de vitesse lorsque la vitesse réelle se situe en-deçà d'une valeur prédéterminée par rapport à la vitesse commandée.

2. Dispositif de commande de l'accélération selon la revendication 1, caractérisé en ce que les premiers moyens servant à délivrer le premier signal comportent des moyens (25) sensibles à des signaux proportionnels à la vitesse réelle de l'avion et à la vitesse supérieure sélectionnée de manière à délivrer un premier signal d'écart proportionnel à la différence entre la vitesse réelle de l'avion et la vitesse supérieure sélectionnée, des moyens (27) sensibles à des signaux proportionnels à la vitesse réelle de l'avion de manière à produire un signal de taux de variation dans le temps, proportionnel à la vitesse réelle de l'avion, des moyens (31) sensibles au signal du taux de variation dans le temps et au premier signal d'écart pour délivrer un second signal d'écart proportionnel à la différence entre le premier signal d'écart et le signal du taux de variation dans le temps, et des moyens (33) sensibles au second signal d'écart pour limiter le second signal d'écart dans une gamme prédéterminée, le second signal d'écart limité représentant le premier signal destiné à être envoyé aux moyens de servocommande.

3. Dispositif de commande d'accélération selon la revendication 1, caractérisé en ce que les seconds moyens servant à délivrer le second signal comportent des moyens (10) sensibles à une première somme algébrique de signaux proportionnels à l'altitude réelle (H) et la vitesse ascensionnelle ($\dot{H}$) de l'avion de manière à délivrer un signal basculé, des moyens (48) servant à produire un signal en rampe proportionnel à un signal représentatif d'une vitesse ascensionnelle maximale pouvant être obtenue pour l'avion, le signal représentant la vitesse ascensionnelle maximale pouvant être obtenue étant limité à une gamme prédéterminée, des moyens multiplicateurs (X) sensibles à des signaux proportionnels à la vitesse aérodynamique vraie ($V_T$) et au rapport de la différence algébrique de la poussée moins la traînée par le poids de l'avion (($T-D$)/W), pour délivrer le signal représentatif de la vitesse ascensionnelle maximale pouvant être obtenue, et des moyens (12) pour produire une seconde somme algébrique de signaux comprenant le signal en rampe, le signal basculé et les signaux proportionnels à l'altitude réelle et à la vitesse ascensionnelle réelle de l'avion, la seconde somme algébrique représentant le second signal.

4. Dispositif de commande de l'accélération selon la revendication 3, caractérisé en ce que le signal basculé possède la forme:

$$H_S = H + K\dot{H}$$

avec

$H_S$ = altitude calculée en pieds (ou en mètres)

H = altitude réelle de l'avion en pieds (ou en mètres)

K = paramètre qui détermine la forme de la trajectoire de vol et se présente sous la forme K=he/$\dot{h}$a, avec he=écart d'altitude en pieds (ou en mètres) entre l'altitude choisie et l'altitude actuelle et $\dot{h}$a=vitesse ascensionnelle

$\dot{H}$ = vitesse actuelle d'ascension de l'avion en pieds par minute (ou en mètres par minute).

5. Dispositif de commande de l'accélération selon la revendication 3 ou 4, caractérisé en ce que le signal en rampe se présente sous la forme:

$$H_{RAMPE} = H_S + H_{RAMPE}(t-t_0)$$

avec

$H_{RAMPE}$ = altitude de montée en rampe calculée en pieds (ou en mètres)

$H_S$ = altitude initiale calculée en pieds (ou en mètres)

$H_{RAMPE}$ = taux d'accroissement prédéterminé de l'altitude calculée en pieds par minute (mètres par minute)

t = temps en minutes

$t_0$ = temps correspondant à l'altitude initiale calculée.

6. Dispositif de commande de l'accélération selon l'une quelconque des revendications 3 à 5, caractérisé en ce que le signal correspondant à la second somme algébrique possède la forme:

$$H_E - K\dot{H} = 0$$

avec

$H_E$ = écart d'altitude en pieds (ou en mètres) entre l'altitude en montée en rampe calculée et l'altitude réelle.

K = paramètre qui détermine la forme de la trajectoire de vol et se présente sous la forme K=he/$\dot{h}$a, avec he=écart d'altitude en pieds (ou en mètres) en l'altitude choisie et l'altitude actuelle et $\dot{h}$a=vitesse d'ascension

$\dot{H}$ = ladite vitesse ascensionnelle réelle en pieds par minutes (en mètres par minute).

FIG.1.

FIG.2.

FIG.3.

FIG.4.

ΔM-BASED
A/P CMD

SYNTHETIC
ALTITUDE
CAPTURE CMD

$M_{CMD_N}$
$-M_{CMD_{N-1}} > +.005$

CLIMB

$M_{CMD} - M < .020$

S LATCH R Q

TO A/P

EP 0 176 300 B1